# EUROPEAN PATENT APPLICATION

(11) **EP 2 481 917 A1**
(43) Date of publication of application: **01.08.2012**
(21) Application number: 11000596.4
(22) Date of filing: 26.01.2011
(51) Int. Cl.: F03D 7/02, F03D 7/04

(54) **A wind turbine with hydrostatic transmission and lvrt control**

(71) Applicant: CHAPDRIVE AS, 7030 Trondheim (NO)
(72) Inventor: Chapple, Peter, Bradford-on-Avon (GB); Niss, Michael, Odegaard, Kuch, 9510 Arden (DK)
(74) Representative: Fluge, Per Roald

(57) **Abstract**

A system and method for maintaining the rotational speed for the generator and turbine of a wind turbine power production system during a low voltage condition. The system having a closed loop hydrostatic transmission system and an electric generator. The system comprises a control unit, and a flow control valve between the high pressure line and the low pressure line. The flow control valve receives a signal from the control unit and controls a flow of hydraulic fluid from the high pressure line to the low pressure line. The voltage of the electric grid is sent to the control unit which reduces the displacement and controls the flow of the flow control valve when a low voltage condition is detected to maintain the generator rotational speed and the turbine rotational speed during the low voltage condition. The generator can also be re-connected to the grid according to the invention if it drops out if the low voltage duration exceeds the requirements of the grid code.

## Description

### Technical field

The present invention relates to the field of wind turbines used for producing electrical energy, and more particularly to wind turbines where the electric generator is driven by a hydrostatic transmission system and the electric generator is connected to an electric grid, and should remain connected to the electric grid when the electric grid suffers from temporary low voltage conditions as defined in the Low Voltage Ride Through requirements of a specific Grid Code.

### Background art

The electrical power grid infrastructure has traditionally grown based on large central-station generating units providing electricity through transmission lines and distribution grids from the generating units to the consumers. However, more focus on renewable energy sources, deregulation, new power electronics technology etc. paves the way for more distributed energy production where a two-way flow of power will be required for a larger penetration of embedded energy sources, such as wind turbine power plants, often located far from the traditional centralised power plants.

Grid codes are technical requirements defining the parameters that electrical generators or electrical generator plants should meet to ensure proper functioning of the electrical grid. Grid codes are becoming increasingly important where electric energy is not any longer delivered only by a national electricity company, often the same as the owner of the national grid, but where an increasing number of additional suppliers connect their generators to the grid. Varying behaviour in the electric power plant could lead to instability and undesired characteristics in the electric grid. Therefore all electricity suppliers are required to comply with the grid code.

To allow future penetration of alternative energy sources such as wind the grid codes need to be observed in order to prevent instability in the electrical grid.

The authority responsible for the electricity distribution specifying the grid code may vary from country to country, and today some of the requirements can vary significantly from one state to another due to the lack of harmonization. This multitude of requirements may require adaptation of power plants to the different national grids, a process that is often inefficient for both the manufacturers and developers.

Low Voltage Ride Through (LVRT), often referred to as Fault Ride Through (FRT) may be defined as the behaviour of an electric device connected to a utility grid when the electric grid suffers from low voltage situations. The specific LVRT requirements for generating devices are usually described in the Grid Codes issued by the specific grid operator in charge of the electric grid that the generating devices are connected to. In the context of this application LVRT requirements are those for a power production system when the voltage of the electric grid is temporarily reduced due to a fault or load change in the grid. LVRT requirements are therefore related to the behaviour of a power production system feeding an electric grid voltage of one, two or all three phases of the electric grid.

In the report "Mapping of grid faults and grid codes - Riso National Laboratory, 2007 (p. 41), Riso-R-1617(EN)" by lov et al, an overview of the frequency of grid faults and the grid connection requirements for some countries is given. In the report it can be seen that the requirements are varying considerably from country to country, i.e. ride through times from in the order of 100 ms to several seconds as a function of percentage of nominal grid voltage.

Traditionally wind turbines with varying turbine speed use so called Double Fed Induction Generators, DFIG, but Permanent Magnet Synchronous Generators, PMG are becoming increasingly popular due to their better overall characteristics and efficiency, especially at partial speed in wind turbine systems. In both cases converters are used between the generators and the electric grid, and LVRT requirements are met by controlling the converters.

European patent EP1561946B1 describes the control of an inverter conditioning the generator to provide Low Voltage Ride Through capabilities of the turbine by sensing the frequency and phase angle of the grid and controlling the inverter by a command signal from the control unit that is a function of the sensed parameters to align the output of the inverter with the grid.

When a significant dip in the grid voltage occurs, the torque of the electric generator is considerably reduced. This will result in acceleration of the turbine rotor which may result in rotor instability. To handle this problem the voltage of the grid must be restored fast or the accelerating mechanical torque must be reduced. Usually a mechanical disc brake in the nacelle is applied to reduce the speed of the turbine rotor instantly before the slower pitch control unit is able to take over and the control of the turbine rotational speed. In addition a torque regulating system may be used. When the voltage returns to its nominal voltage within the LVRT requirements the pitch control and the torque regulating system is used to align the output voltage, frequency and phase with that of the grid.

International patent application WO2010085988 A2 describes a utility for providing Low Voltage Ride Through capabilities. The utility includes a directly connected synchronous generator, where the utility boosts the excitation current applied to the rotor during low voltage events. Further the document describes that the utility may include a torque regulator in the form of a torque regulating gearbox which in turn includes adjustable guide vanes that may be positioned to reduce the amount of mechanical torque applied to the rotor shaft of the synchronous generator during low voltage events.

Wind turbines with hydrostatic transmission comprising one or more hydraulic pumps and one or more hydraulic motors are of particular importance for the development of the wind turbine industry since they allow for many of the heavy-weight components, such as the electrical generator to be relocated from the nacelle to a location closer to the base of the tower. In addition mechanical gearboxes exposed to wear and being a large contributor to the maintenance, weight and lifetime costs of wind turbine installations are not needed.

International patent application WO2007/053036 A1 describes such a wind turbine with a displacement controlled hydrostatic transmission and the use of a synchronous generator directly connected to the electric grid.

In international patent application WO 2008113699 A2 it is shown how hydraulic valves may be used for halting or braking the wind turbine, and thereby replacing mechanical brakes and further reducing the number of mechanical components in the nacelle of the wind turbine system.

### Short summary

The present invention discloses a wind turbine power production system with a closed loop hydrostatic transmission system and a synchronous generator directly connected to the grid that is able to comply with Low Voltage Ride Through requirements without the use of electrical converters. In addition it provides a system and method for connecting the wind turbine power production system to the grid in case the low voltage condition lasts longer than the wind turbine power production system is supposed to be connected according to the grid code requirements, and the generator was temporarily disconnected from the grid. The re-connection can be performed without the use of electric converters.

The invention is related to a wind turbine power production system with a closed loop hydrostatic transmission system for the transfer of mechanical energy from a wind turbine rotor with a turbine rotational speed to a synchronous electric generator wherein the hydrostatic transmission system comprises a hydraulic pump and a variable displacement hydraulic motor with a displacement that is varied as a function of a displacement control signal. An output of the hydraulic pump is connected to an input of the hydraulic motor by a high pressure line and an input of the hydraulic pump is connected to an output of the hydraulic motor by a low pressure line. The hydraulic motor drives the synchronous electric generator with a generator rotational speed.

According to an embodiment the invention is a wind turbine power production system as described above, further comprising;
- a control unit,
- a flow control valve arranged between the high pressure line and the low pressure line. The flow control valve is arranged for receiving a flow control signal from the control unit and controlling a flow of hydraulic fluid from the high pressure line to the low pressure line as a function of the flow control signal,
- a voltage sensor arranged for sensing a voltage of an electric grid connected to the generator and sending the voltage signal to the control unit.
Where the control unit is arranged for reducing the displacement of the variable displacement hydraulic motor and controlling a flow rate through the flow control valve when a low voltage condition of the voltage of the electric grid is detected to maintain the generator rotational speed and the turbine rotational speed during the low voltage condition.

According to an embodiment the invention is also a method for maintaining a generator rotational speed and a turbine rotational speed of a wind turbine power production system as described above during a low voltage condition, where the method comprises the following steps;
- continuously sensing the voltage, and
- if a low voltage condition of the voltage of the electric grid is detected
- reducing the displacement of the variable displacement hydraulic motor and controlling a flow rate through the flow control valve,
to maintain the generator rotational speed and the turbine rotational speed during the low voltage condition.

The present invention has a number of advantages. One of these is that a wind turbine system according to the invention can comply with various different national and regional requirements for Low Voltage Ride Through (LVRT) requirements. Due to the inventive hydraulic circuit design and control, the turbine and generator may be instantly disconnected from each other during a low voltage condition, where the generator runs synchronously with the electric grid, and the turbine continues to run with a constant rotational speed. This solution is mainly independent of the actual voltage drop or the duration of the voltage drop of the electric grid. When voltage in the electric grid returns to normal the turbine and generator are hydraulically re-connected to resume power production. Thus, according to the invention no specific arrangement or implementation has to be made for compliance with specific grid codes.

Another advantage is that a wind turbine system according to the invention that the number of larger mechanical and electrical components can be reduced with respect to wind turbine systems in prior art that are capable of handling Low Voltage Ride Through (LVRT) requirements. Neither a converter between the generator and the grid, nor a mechanical brake is needed to comply with the LVRT requirements. Such components may contribute substantially to the weight of the nacelle of the power production system. In addition, due to wear, maintenance costs of such components can contribute significantly to the overall lifetime costs of wind turbines, especially in harsh operating conditions, such as for off-shore installations. According to the current invention pitch angle control is not required for the handling of LVRT. This further simplifies the handling of LVRT requirements compared to many of the solutions proposed by prior art.

Wind turbine power production systems or plants are often located far from the central power stations in parts of the distribution network where the electric grid is weak, i.e. the characteristics of the grid may easily be altered by local loads or power sources. An advantage of the system and method according to the present invention is the elasticity, i.e. the ability to follow the changing characteristics such as voltage perturbations of the electric grid during low voltage conditions.

In addition the present invention has the advantage that the wind turbine power production system can be reconnected to the grid in case the low voltage condition lasted longer than stated in the grid codes, and the generator was temporarily disconnected from the grid. The wind turbine system according to the invention can be synchronised with the electric grid before connecting the generator to the electric grid without the use of electric converters. In conventional wind turbine power production systems electric converters are needed to synchronise the output of the generator with the electric grid to ensure that the voltage frequency and phase is within the requirements set by the grid operator before connecting the system to the grid. According to the present invention the fast displacement control of a hydraulic system in combination with a relatively slower pitch control unit allows synchronization with the grid with a reduced number of system components, and thus lower installation and maintenance costs of the wind turbine power production system.

Further, converters introduce an efficiency loss in the system, in particular when they operate outside a rated operational range.

### Brief description of the figures in the drawings

The invention is illustrated in the attached drawing figures is meant to illustrate preferred and alternate embodiments of the invention. The drawings shall not be construed to limit the scope of the invention which shall solely be limited by the attached claims.
Fig. 1 shows in a schematic drawing a system according to an embodiment of the invention. Additional components of wind turbine power production systems, such as oil filters, booster pump, oil reservoir, valves, control unit etc. can be found in prior art, e.g. international patent application WO2007/053036 A1.
Fig. 2 shows in a graph an example of generator rotational speed in the upper graph, and turbine rotational speed in the lower graph for a low voltage condition lasting for 10s at 15% of nominal voltage.

### Embodiments of the invention

Embodiments of the present invention will now be described in greater detail with reference to the accompanying drawings. It should be noted that the embodiments given below are exemplary only, and they are not limiting for the invention.

The present invention relates to wind turbines where the electric generator is driven by a hydrostatic transmission system and the electric generator is connected to an electric grid, and should remain connected to the electric grid even when the electric grid suffers from temporary low voltage conditions as defined in the Low Voltage Ride Through requirements of a specific Grid Code. Such Grid Codes may vary considerably from country to country as described previously.

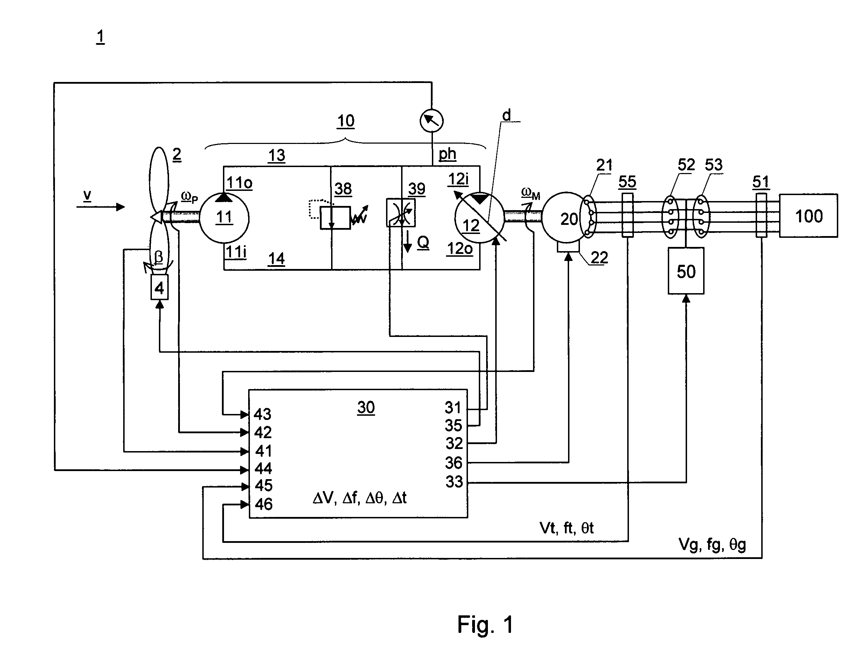

In Fig. 1 a wind turbine power production system (1) with a closed loop hydrostatic transmission system (10) for the transfer of mechanical energy from a wind turbine rotor (2) with a turbine rotational speed (ωₚ) to a synchronous electric generator (20) according to an embodiment of the invention is shown. The hydrostatic transmission system (10) comprises a hydraulic pump (11) and a variable displacement hydraulic motor (12) with a displacement (d) that is varied as a function of a displacement control signal (32). An output (11o) of the hydraulic pump (11) is connected to an input (12i) of the hydraulic motor (12) by a high pressure line (13) and an input (11i) of the hydraulic pump (11) is connected to an output (12o) of the hydraulic motor (12) by a low pressure line (14). The hydraulic motor (12) is driving the synchronous electric generator (20) with a generator rotational speed (ωₘ).

The wind turbine power production system (1) further comprises a control unit (30), and a flow control valve (39) arranged between the high pressure line (13) and the low pressure line (14). The flow control valve (39) is arranged for receiving a flow control signal (31) from the control unit (30) and controlling a flow of hydraulic fluid from the high pressure line (13) to the low pressure line (14) as a function of the flow control signal (31).

The wind turbine power production system (1) further comprises a voltage sensor (51) arranged for sensing a voltage (U) of an electric grid (100) connected to the generator (20) and sending the voltage signal (34) to the control unit (30).

The control unit (30) is arranged for reducing the displacement (d) of the variable displacement hydraulic motor (12) and controlling a flow rate (Q) through the flow control valve (39) when a low voltage condition of the voltage (U) of the electric grid (100) is detected to maintain the generator rotational speed (ωₘ) and the turbine rotational speed (ωₚ) during the low voltage condition.

According to an embodiment of the invention the flow control valve (39) is in normal operation closed by the flow control signal (31) from the control unit (30). The level of the motor displacement (d) may be set by the control unit (30) when the a low voltage condition is not detected depending on the operational mode of the wind turbine power production system (1). According to an embodiment of the invention the motor displacement (d) is part of a closed loop system for the control of turbine rotational speed (ωₚ) at a preset value.

When the low voltage condition is sensed it is required to maintain the generator rotational speed (ωₘ) such that the generator (20) remains connected to the grid (100). For this situation to be maintained the flow control valve (39) will be connected to the high pressure line (13) of the loop of the hydrostatic transmission system (10) and will provide a constant flow rate (Q) from the high pressure line (13) to the low pressure line (14) of the loop. The high output pressure from the pump (11) will be at the level necessary to provide sufficient pump torque to resist the torque from the turbine rotor (2). The flow control valve (39) is of the pressure compensated type so that the restriction of the valve is automatically varied in order to maintain the flow at a preset value regardless of the pressure level.

By maintaining the flow in this way the turbine speed is kept constant, the power from which is absorbed by the restrictive process in the valve. This will cause heating of the oil for the length of time that the low voltage condition persists such heat being dissipated into the oil cooling system in the normal way.

In order to keep the generator (20) operating at synchronous speed, i.e. the speed required to be in synchronization with the electric grid (100), the displacement (d) is reduced to zero by the control unit (30), thus not requiring any significant levels of torque from the generator (20) whilst the generator (20) operates as an electric motor at synchronous speed. Reducing the displacement (d) to zero also stops oil from the hydraulic pump (11) from passing through the hydraulic motor (12).

When the voltage (U) of the electric grid (100) returns to its nominal value the control unit (30) sends a flow control signal (31) to the flow control valve (39) to reduce the flow rate (Q), and further sends a displacement control signal (32) to the hydraulic motor (32) to increase the displacement (d) of the variable displacement hydraulic motor (12). The flow rate (Q) will be reduced to zero, and the displacement (d) will be controlled according to the control algorithm for the wind turbine power production in normal power production mode.

The invention also discloses a method for maintaining a generator rotational speed (ωₘ) and a turbine rotational speed (ωₚ) of a wind turbine power production system (1) during a low voltage condition. In an embodiment the method comprises the following features;
- continuously sensing the voltage (U), and
- if a low voltage condition of the voltage (U) of the electric grid (100) is detected
- reducing the displacement (d) of the variable displacement hydraulic motor (12) and controlling a flow rate (Q) through the flow control valve (39),
to maintain the generator rotational speed (ωₘ) and the turbine rotational speed (ωₚ) during the low voltage condition.

According to an embodiment of the invention the displacement is reduced to below 10% of maximum displacement when the low voltage condition of the voltage (U) of the electric grid is detected.

According to an embodiment of the invention the displacement is reduced to below zero when the low voltage condition of the voltage (U) of the electric grid is detected.

According to an embodiment of the invention the control unit (30) is arranged for controlling the flow rate (30) through the flow control valve (39) the value of which is set by the control unit (30) during the low voltage condition.

The control unit (30) has to operate the wind turbine power production system (1) as described above so as maintain the turbine rotational speed (ωₚ) and generator rotational speed (ωₘ) during the low voltage period. For a system manufacturer there are many different grid codes that have to be complied with which show the voltage to vary with time. The maximum time specified for this condition is e.g. 1 s or 10s, the implication of which concerns the level of energy that is put into the oil and which has to be removed by the cooler. For the system described above the level of the voltage change will only affect the operation of the generator (20) which maintains its operation at synchronous speed with the electric grid (100). Thus, according to the invention no specific arrangement or implementation has to be made for compliance with specific grid codes.

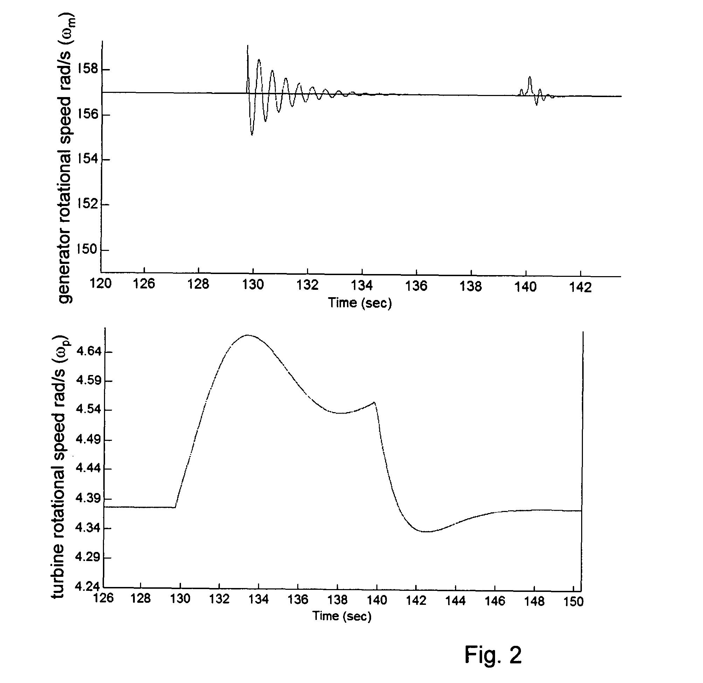

Fig. 2 shows in a graph an example of generator rotational speed (ωm) in the upper graph, and turbine rotational speed (ωp) in the lower graph for a low voltage condition lasting for 10s at 15%. The actual voltage level does not affect the situation as long as the generator (20) can maintain synchronous speed with the electric grid (100) during the condition when the torque of the hydraulic motor (12) is negligibly small. Because the hydraulic pump (11) is effectively disconnected from the hydraulic motor (12) because the motor is at zero, or close to zero displacement (d) the amount of energy put into the oil depends only on the level of the wind speed of the wind driving the turbine.

The synchronous generator (20) will in an embodiment of the invention be controlled by an excitation circuit during the low voltage condition. It may then follow the voltage of the electric grid during the low voltage condition.

Fig. 1 also shows a pressure relief valve (38) arranged between the high pressure line (13) and the low pressure line (14) that will open when the hydrostatic system pressure exceeds a predetermined value. One or more such pressure relief valves are used to ensure that the components of the hydrostatic system is not harmed by pressures above the rated value of the system. The hydraulic pressure in the low pressure line (14) is kept at a constant value by the boost system of the hydraulic circuit. Since, the LVRT condition normally occurs at rated wind speeds, the system pressure is normally below the threshold of the pressure relief valve, e.g. in the range of 150 to 300 bar for an exemplary installation. The pressure relief valves will therefore normally not have any influence on the LVRT control performed by controlling the flow control valve (39).

In Fig. 1 an electric generator (20) is shown. It comprises electric output terminals (21) directly connected to first contacts (52) of a main breaker (50) where second contacts (53) of the main breaker (50) are connected to an electric grid (100). The main breaker is of a standard type used in wind turbines as will be understood by a person skilled in the art. When the wind turbine power production system (1) has been disconnected from the grid (100) due to a low voltage condition exceeding the requirements of the grid code and a subsequent breaker control signal (33) has been sent to the main breaker (50) to perform a disconnection, the wind turbine power production system should be re-connected to the grid (100) as soon as the grid (100) recover from the failure, i.e. the voltage level is according to the nominal value of the grid, or within the re-connection requirement of the appropriate grid code.

To re-connect the wind turbine power production system (100) to the grid the control system is in an embodiment of the invention arranged for continuously calculating and sending a pitch control signal (35) to a pitch control actuator (4) and sending the displacement control signal (d) to the hydraulic motor (12) to maintain a generator output frequency (ft) within a predefined allowable grid frequency range (Δf) when the main breaker (50) is switched off. Further, comparing a difference in phase angle between a generator phase angle (θt) and a grid phase angle (θt) with a predefined allowable phase angle range (Δθ), and sending a control signal (33) to the main breaker (50) to connect the wind turbine power production system (1) to the grid (100) when the difference in phase angle is within the predefined allowable phase angle range (Δθ) for a predefined time (Δt).

Given that the phase angle should also be within the specified limits at the same time as the frequency, it is necessary to control the generator speed so that it stays within the frequency range for some amount of time until the phase angle difference gets low enough to connect the generator to the grid.

In an embodiment the control unit (30) is arranged for sending an excitation control signal (36) to an exciter (22) of the electric generator (20) to maintain a generator output voltage (Vt) within a predefined allowable grid voltage range (ΔV). In an embodiment the generator output voltage (Vt) is fixed in the exciter, and the control system (30) will not have to change the set voltage.

The hydraulic transmission system (10) is arranged for the transfer of all mechanical energy from the turbine rotor (2) to the synchronous electric generator (20), i.e. no additional or parallel energy transfer means are used between the turbine rotor and the generator. The hydraulic transmission system (10) is in this embodiment of the invention a closed loop, i.e. an output (11o) of the hydraulic pump (11) is connected to an input (12i) of the hydraulic motor (12) by a high pressure line (13) and an input (11i) of the hydraulic pump (11) is connected to an output (12o) of the hydraulic motor (12) by a low pressure line (14). The hydraulic motor (12) is driving the synchronous electric generator (20) with a generator rotational speed (ωₘ). The generator rotational speed (ωₘ) is thus the same as the rotational speed of the hydraulic motor (12). The turbine rotor (2) driven by the wind with a wind speed (v) rotates with a turbine rotational speed (ωₚ).

In an embodiment the invention is also a method for connecting the wind turbine power production system (1) to an electric grid (100) comprising the following steps;
- continuously controlling the pitch angle (β) and simultaneously controlling the displacement (d) to control a generator output frequency (ft),
- sending a breaker control signal (33) to switch on the main breaker (50) to connect the wind turbine power production system (1) to the grid (100).

In an embodiment the method comprises continuously controlling the pitch angle (β) and simultaneously controlling the displacement (d) to maintain a generator output frequency (ft) within a predefined allowable grid frequency range (Δf) when the main breaker (50) is switched off. Before connecting the generator to the grid the method will also control the phase angle of the grid and the generator by;
- comparing a difference in phase angle between a generator phase angle (θt) and a grid phase angle (θt) with a predefined allowable phase angle range (Δθ), and
- switching on the main breaker (50) to connect the wind turbine power production system (1) to the grid when the difference in phase angle is within the predefined allowable phase angle range (Δθ) for a predefined time (Δt).

In an embodiment the control system (30) is optimized for synchronization at low wind speeds as most connections will be performed under these conditions. During testing and when the turbine has been stopped due to very high winds and the wind then drops again, it is also necessary to be able to connect at higher wind speeds. But as connection in general is taking place at low wind speeds it is accepted that it might take a little longer to connect at the high wind speeds due to poorer performance.

## Claims

1. A wind turbine power production system (1) with a closed loop hydrostatic transmission system (10) for the transfer of mechanical energy from a wind turbine rotor (2) with a turbine rotational speed (ωₚ) to a synchronous electric generator (20) wherein said hydrostatic transmission system (10) comprises a hydraulic pump (11) and a variable displacement hydraulic motor (12) with a displacement (d) that is varied as a function of a displacement control signal (32), where an output (11o) of said hydraulic pump (11) is connected to an input (12i) of said hydraulic motor (12) by a high pressure line (13) and an input (11i) of said hydraulic pump (11) is connected to an output (12o) of said hydraulic motor (12) by a low pressure line (14), said hydraulic motor (12) driving said synchronous electric generator (20) with a generator rotational speed (ωₘ), said wind turbine power production system (1) further comprising
- a control unit (30),
- a flow control valve (39) arranged between said high pressure line (13) and said low pressure line (14) arranged for receiving a flow control signal (31) from said control unit (30) and controlling a flow of hydraulic fluid from said high pressure line (13) to said low pressure line (14) as a function of said flow control signal (31), and
- a voltage sensor (51) arranged for sensing a voltage (U) of an electric grid (100) connected to said generator (20) and sending said voltage signal (34) to said control unit (30),
- said control unit (30) arranged for reducing said displacement (d) of said variable displacement hydraulic motor (12) and controlling a flow rate (Q) through said flow control valve (39) when a low voltage condition of said voltage (U) of said electric grid (100) is detected to maintain said generator rotational speed (ωₘ) and said turbine rotational speed (ωₚ) during said low voltage condition.

2. A wind turbine power production system (1) according to claim 1, wherein said displacement (d) is reduced to zero when said low voltage condition of said voltage (U) of said electric grid (100) is detected.

3. A wind turbine power production system (1) according to claim 1, wherein said displacement (d) is reduced to below 10% of maximum displacement (d) for said hydraulic motor (12) when said low voltage condition of said voltage (U) of said electric grid (100) is detected.

4. A wind turbine power production system (1) according to claim 1, where said flow control valve (39) is pressure compensated so that the restriction of said flow control valve (39) is automatically varied in order to maintain the flow rate (Q) at a preset value regardless of the pressure level.

5. A wind turbine power production system (1) according to any of the claims 1 to 4, wherein said control unit (30) is arranged for;
- continuously calculating and sending a pitch control signal (35) to a pitch control actuator (4) and said displacement control signal (d) to control a generator output frequency (ft), and
- sending a control signal (33) to said main breaker (50) to connect said wind turbine power production system (1) to said grid (100) when said main breaker (50 is switched off.

6. A wind turbine power production system (1) according to claim 5, wherein said control unit (30) is arranged for;
- continuously calculating and sending said pitch control signal (35) and said displacement control signal (d) to maintain a generator output frequency (ft) within a predefined allowable grid frequency range (Δf) when said main breaker (50) is switched off,
- comparing a difference in phase angle between a generator phase angle (θt) and a grid phase angle (θt) with a predefined allowable phase angle range (Δθ), and
- sending a control signal (33) to said main breaker (50) to connect said wind turbine power production system (1) to said grid (100) when said difference in phase angle is within said predefined allowable phase angle range (Δθ) for a predefined time (Δt).

7. A wind turbine power production system (1) according to claim 6, wherein said control unit (30) is arranged for;
- sending an excitation control signal (36) to an exciter (22) of said electric generator (20) to maintain a generator output voltage (Vt) within a predefined allowable grid voltage range (ΔV).

8. A method for maintaining a generator rotational speed (ωₘ) and a turbine rotational speed (ωₚ) of a wind turbine power production system (1) during a low voltage condition,
said wind turbine power production system (1) comprising a closed loop hydrostatic transmission system (10) for the transfer of mechanical energy from a wind turbine rotor (2) with a turbine rotational speed (ωₚ) to a synchronous electric generator (20) wherein said hydrostatic transmission system (10) comprises a hydraulic pump (11) and a variable displacement hydraulic motor (12) with a displacement (d) that is varied as a function of a displacement control signal (32), where an output (11o) of said hydraulic pump (11) is connected to an input (12i) of said hydraulic motor (12) by a high pressure line (13) and an input (11i) of said hydraulic pump (11) is connected to an output (12o) of said hydraulic motor (12) by a low pressure line (14), said hydraulic motor (12) driving said synchronous electric generator (20) with a generator rotational speed (ωₘ), said wind turbine power production system (1) further comprising;
- a control unit (30),
- a flow control valve (39) arranged between said high pressure line (13) and said low pressure line (14) arranged for receiving a flow control signal (31) from said control unit (30) and controlling a flow of hydraulic fluid from said high pressure line (13) to said low pressure line (14) as a function of said flow control signal (31), and
- a voltage sensor (51) arranged for sensing a voltage (U) of an electric grid (100) connected to said generator (20) and sending said voltage signal (34) to said control unit (30), said method comprising the following steps;
- continuously sensing said voltage (U), and
- if a low voltage condition of said voltage (U) of said electric grid (100) is detected
- reducing said displacement (d) of said variable displacement hydraulic motor (12) and controlling a flow rate (Q) through said flow control valve (39),
to maintain said generator rotational speed (ωₘ) and said turbine rotational speed (ωₚ) during said low voltage condition.

9. A method according to claim 8, comprising the step of reducing said displacement (d) to zero when said low voltage condition of said voltage (U) of said electric grid (100) is detected.

10. A method according to claim 9, comprising the step of reducing said displacement (d) to below 10% of maximum displacement (d) for said hydraulic motor (12) when said low voltage condition of said voltage (U) of said electric grid (100) is detected.

11. A method according to claim 10, comprising the step of controlling said flow rate (Q) through said flow control valve (39) which is maintained at a constant value the level of which is set by the control unit (30) during said low voltage condition.

12. A method according to any of the claims 8 to 11 comprising the following steps;
- continuously calculating and sending a pitch control signal (35) to a pitch control actuator (4) and said displacement control signal (d) to control a generator output frequency (ft), and
- sending a control signal (33) to said main breaker (50) to connect said wind turbine power production system (1) to said grid (100) when said main breaker (50 is switched off.

13. A method according to claim 12, comprising the following steps;
- continuously controlling said pitch angle (β) and simultaneously controlling said displacement (d) to maintain a generator output frequency (ft) within a predefined allowable grid frequency range (Δf) when said main breaker (50) is switched off,
- comparing a difference in phase angle between a generator phase angle (θt) and a grid phase angle (θt) with a predefined allowable phase angle range (Δθ), and
- switching on said main breaker (50) to connect said wind turbine power production system (1) to said grid when said difference in phase angle is within said predefined allowable phase angle range (Δθ) for a predefined time (Δt).

14. A method according to claim 13, comprising the following steps;
- sending an excitation control signal (36) to an exciter (22) of said electric generator (20) to maintain a generator output voltage (Vt) within a predefined allowable grid voltage range (ΔV).
